# EUROPEAN PATENT SPECIFICATION

(11) **EP 2 125 335 B1**
(45) Date of publication and mention of the grant of the patent: **16.02.2011**
(21) Application number: 08719345.4
(22) Date of filing: 19.03.2008
(51) Int. Cl.: B29C 65/00, B29C 65/08, B65B 9/20, B65B 51/22, B65B 51/26

(54) **A MACHINE FOR MANUFACTURING POUCHES OF COHESIONLESS MATERIAL**
MASCHINE ZUR HERSTELLUNG VON KOHÄSIONSLOSES MATERIAL ENTHALTENDEN BEUTELN
MACHINE DE FABRICATION DE SACHETS DE MATERIAU PULVERULENT

(30) Priority: 20.03.2007 IT BO20070197
(43) Date of publication of application: 02.12.2009
(73) Proprietor: AZIONARIA COSTRUZIONI MACCHINE AUTOMATICHE-A.C.M.A.-S.p.A., 40131 Bologna (IT)
(72) Inventor: BOLDRINI, Fulvio, I-44100 Ferrara (IT); GHIOTTI, Roberto, I-40050 Calderino di Monte San Pietro (IT)
(74) Representative: Ghioni, Carlo Raoul Maria
(86) International application number: PCT/IB2008/000663
(87) International publication number: WO 2008/114133

(56) References cited:
- EP-A- 0 149 985
- DE-A1- 10 347 015
- US-A- 5 174 088

## Description

### Technical Field

The present invention relates to a machine for manufacturing individual bags or cohesionless material according to the preamble of claim 1, and in particular, pouches of nasal snuff, or of moist snuff (also known as *snus*) for oral use.

Reference is made explicitly to tobacco in the course of the following specification, albeit no limitation in scope is implied, as the cohesionless material might consist similarly, for example, in powdered pharmaceutical or confectionery products treated with moisturizing agents.

### Background Art

The prior art embraces machines of the type in question, which comprise a dispensing disc rotatable intermittently about a vertical axis and furnished with a ring of cavities, each containing a quantity or portion of tobacco that will correspond to the contents of a single pouch.

The portions are released into the single cavities at a filling station from a hopper containing a supply of powdered tobacco en masse, treated with flavouring and moisturizing agents.

With the disc in rotation, the cavities are directed through a transfer station where the single portion of tobacco contained in each cavity is ejected.

Installed at this same station are pneumatic ejection means comprising a nozzle positioned above the dispensing disc. At each pause in the movement of the disc, a portion of tobacco is forced by the nozzle from the relative cavity into a duct, of which the mouth lies beneath the disc and in alignment with the nozzle, and toward a wrapping station where the single pouches are formed.

The wrapping station comprises a tubular element, placed at the outlet of the duct and functioning as a mandrel over which to fashion a tubular envelope, for example, of paper material or nonwoven fabric.

The material in question consists of a continuous web decoiled from a troll and fed in a direction parallel to the axis of the tubular element, which is wrapped progressively around the element and scaled longitudinally.

Beyond the tubular element, the machine is equipped with transverse sealing means of which the operation is intermittent and synchronized with the transfer of the tobacco portions, in such a way that each successive portion will be sealed in a relative segment of the continuous tubular envelope of wrapping material delimited by two consecutive transverse seals.

The successive tubular segments of wrapping material, formed as pouches containing respective portions of tobacco, are separated one from the next through the action of cutting means positioned downstream of the transverse sealing means.

Such machine is known by EP 0149985 which discloses a machine according to the preamble of claim 1.

Machines of the type in question present certain drawbacks.

In effect, such machines are not able to guarantee a completely smooth flow of the tobacco product through the connecting duct and the tubular element.

The amount of tobacco deposited on the walls of the connecting duct and the tubular element increases significantly, in particular, when the moisture content of the tobacco exceeds certain limits; jeopardizing correct operation of the machine.

In order to remove the tobacco accumulating internally of the connecting duct and of the tubular element, the machine must be shut down, whereupon these same parts have to be dismantled so that the tobacco deposited on their inside surfaces can be removed by hand.

These operations are a source of high maintenance costs, and have the effect of reducing production capacity.

### Disclosure of the Invention

The object of the present invention is to provide a machine according to claim 1 for manufacturing single pouches of smokeless tobacco that will be unaffected by the drawbacks mentioned above in connection with machines of the prior art, and able to guarantee a high production tempo while avoiding the formation of tobacco deposits internally of the aforementioned connecting duct and tubular element.

### Brief Description of the Drawings

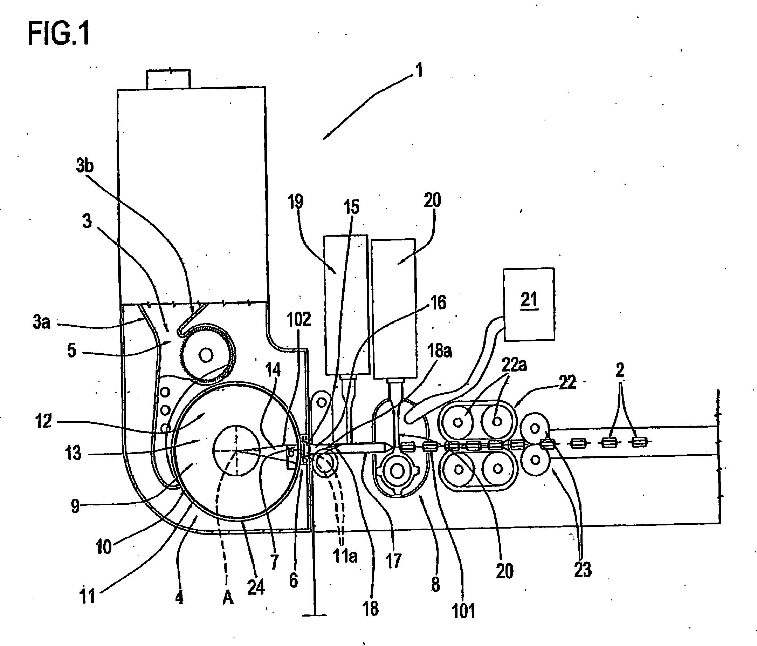

The invention will now be described in detail, by way of example, with the aid of the accompanying drawing, figure 1, which shows a machine according to the present invention, viewed schematically and in a front elevation.

### Detailed Description of the Preferred Embodiments of the Invention

With reference to figure 1, numeral 1 denotes a machine for manufacturing pouches 2 containing a cohesionless material, in particular a smokeless tobacco product.

The machine 1 comprises a hopper 3 filled with the material in question and constituting tobacco feed means 100, also conveying means 4 rotatable between a delivery station 5 at which the cohesionless tobacco material is taken up from the feed means, and a transfer station 6 at which successive portions 7 of tobacco are ejected.

The machine 1 further comprises a wrapping station 8 where the portions 7 of tobacco removed from the transfer station 6 are taken up and enclosed in respective pouches 2.

The conveying means 4 are embodied as a drum 9 rotatable intermittently and anticlockwise, as viewed in the drawing, about a horizontal axis A. The drum 9 is interposed between a bottom end of the hopper 3, delimited by two side walls 3a and 3b, and the aforementioned transfer station 6.

The drum 9 presents a cylindrical wall, denoted 10, that includes a band 11 of predetermined width rendered permeable to air by a plurality of through holes 11a,

The enclosure 12 delimited by the cylindrical wall 10 is divided by two radial walls 12a and 12b into two sectors, denoted 13 and 14.

A first sector 13, located adjacent to the outlet of the hopper 3 and extending around to the transfer station 6, is connected to a source of negative pressure (not illustrated).

A second sector 14, positioned adjacent to and in alignment with the transfer station 6, is angularly complementary to the first sector 13 and connected to a first source of compressed air (not illustrated).

The second sector 14 provides the machine 1 with forcing means 102.

Also indicated are interconnecting means denoted 15, embodied as a rectilinear duct 16, interposed between the transfer station 6 and the wrapping station 8.

The mouth of the duct 16 is in fluid communication with a second source of compressed air (not illustrated)

The wrapping station 8 comprises a tubular mandrel 17 positioned at the outlet end of the rectilinear duct 16, around which a continuous web 18a of wrapping material is formed into tubular envelope 18.

The web 18a of material is decoiled from a roll (not illustrated) and wrapped around the tubular mandrel 17, by degrees, through the agency of suitable folding means.

The edges of the web are sealed by welders 19 positioned next to the tubular mandrel 17, so as to close the tubular envelope 18 longitudinally.

As illustrated in figure 1, the machine 1 also comprises sealing means 20 located beyond the tubular mandrel 17, of which the function is to bond the tubular envelope 18 transversely and thus form a continuous succession 101 of pouches 2, each containing a single portion 7 of tobacco.

According to the invention the longitudinal welders 19 and the transverse sealing means 20 are of ultrasonic type.

More exactly, the longitudinal ultrasonic welders 19 are located in close proximity to, and substantially in contact with the tubular mandrel 17.

Also forming part of the wrapping station 8 are aspirating means 21, located at the outlet end of the tubular mandrel 17 and able, given the porosity of the wrapping material, to create a draught internally of the mandrel 17 such as will ease the passage of the tobacco along the selfsame mandrel.

The transverse sealing means 20 are followed downstream by a pair of transport belts 22 looped around respective pairs of pulleys 22a, serving to advance the continuous succession 101 of pouches 2 toward cutting means 23 - by which the single pouches 2 of the succession 101 are separated one from the next.

In operation, with the drum 9 set in rotation and exposed to the aspirating action of the negative pressure source, the air-permeable band 11 will gradually attract a continuous stream 24 of tobacco.

The continuous stream 24 advances as far as the transfer station 6, where a given length of the selfsame stream 24, corresponding in quantity to one portion 7, will be detached gradually from the drum by a jet of compressed air forced through the holes 11a of the air permeable band 11, and directed into the duct 16,

forced along by the air jet, the portion 7 of tobacco passes along the rectilinear connecting duct 16 and into the tubular mandrel 17, which is ensheathed by the web 18 of wrapping material.

The portion 7 of tobacco is carried forward with the additional force of the air jet generated at the mouth of the rectilinear duct 16 by the aforementioned second source of compressed air.

The envelope 18 of paper is sealed lengthwise by the ultrasonic welders 19, and crosswise, at the outlet end of the tubular mandrel 17, by the transverse sealing means 20.

The operation of the transverse sealing means 20 is intermittent, and timed to match the frequency at which successive portions 7 of tobacco are fed into the transfer station 6, in such a way that each portion 7, of tobacco will be enclosed between two consecutive transverse seals.

Thus, a continuous succession 101 of tobacco-filled pouches 2 will emerge, as aforementioned, joined one to the next by way of the transverse seals.

At a given point downstream of the transverse sealing means 20, the single pouches 2 are separated one from the next by the cutting means 23.

The elements of the design as described above are readily applicable to a twin track type of machine.

In this instance, the conveying means will consist in a drum with two air-permeable bands, in such a way that two portions of tobacco can be supplied simultaneously to the transfer station, and each then directed into a respective duct.

Self-evidently, the machine according to the present invention is able to overcome the aforementioned drawbacks connected with the prior art, by virtue of the fact that the ultrasonic longitudinal welding meant serve not only to form the tubular envelope of wrapping material, but also to generate a shaking action on the tubular mandrel internally of which the tobacco advances, and thus prevent the accumulation of deposits on the inside wall of the mandrel.

Accordingly, the mandrel remains free of obstructions internally and there is no need for any stoppage of the machine to allow the removal of tobacco deposits manually from the inside wall.

## Claims

1. A machine for manufacturing pouches (2) containing cohesionless material comprising:
- feed means by which the material is supplied to conveying means (4) at a delivery station (5), from where the selfsame material is transported by the conveying means (4) to a transfer station (6);
- forcing means (102), operating at the transfer station (6), by which predetermined portions (7) of the material are directed from the conveying means (4) into at least one connecting duct (16) associated with a wrapping station (8) where the portions (7) are enclosed in a continuous succession (101) of pouches (2),
wherein the wrapping station (8) comprises a tubular mandrel (17), positioned at the outlet end of the connecting duct (16) and around which a continuous web (18a) of wrapping material is formed into tubular envelope (18), and
wherein the wrapping station, (8) is equipped with welding means serving to the tubular envelope (18) longitudinally,
**characterized in that** the welding means comprise ultrasonic welding means (19) operating substantially in contact with the tubular mandrel (17) in such a way to transmit vibrations at ultrasonic frequencies to the selfsame mandrel (17), such as to prevent the accumulation of deposits on the inside wall of the tubular mandrel (17).

2. A machine as in claim 1, wherein the wrapping station (8) comprises ultrasonic sealing means (20) located downstream of the tubular mandrel (17), of which the function is to bond the tubular envelope (18) transversely and thus form a continuous succession (101) of pouches (2).

3. A machine as in claim 1 or 2, wherein the wrapping station (9) further comprises aspirating means (21) operating at the outlet end of the tubular mandrel (17).

## Patentansprüche

1. Maschine zur Herstellung von Beuteln (2), die kohäsionsloses Material enthalten, Folgendes beinhaltend:
- Zuführmittel für das Zuführen des Materials zu Fördermitteln (4) an einer Ausgabestation (5), von wo das Material durch die Fördermittel (4) an eine Transferstation (6) befördert wird;
- Vortriebmittel (102), die an der Transferstation (6) wirksam sind und dazu dienen, vorgegebene Portionen (7) des Materials von den Fördermitteln (4) in zumindest eine Verbindungsleitung (16) einzuleiten, die mit einer Verpackungsstation (8) verbunden ist, in der die Portionen (7) in eine kontinuierliche Aufeinanderfolge (101) von Beuteln (2) verpackt werden,
worin die Verpackungsstation (8) einen rohrförmigen Dorn (17) beinhaltet, der am Ausgang der Verbindungsleitung (16) angeordnet ist und um den herum eine Endlosbahn (18a) von Verpackungsmaterial zu einer rohrförmigen Umhüllung (18) geformt wird, und worin die Verpackungsstation (8) mit Schweißeinrichtungen für die Versiegelung der rohrförmigen Umhüllung (18) in Längsrichtung ausgestattet ist,
**dadurch gekennzeichnet, dass** die Schweißeinrichtungen Ultraschall-Schweißeinrichtungen (19) beinhalten, die beim Betrieb im Wesentlichen den rohrförmigen Dorn (17) berühren, so dass Schwingungen mit Ultraschallfrequenzen auf den Dorn (17) übertragen werden, um das Ansammeln von Ablagerungen an der Innenwand des rohrförmigen Doms (17) zu verhindern.

2. Maschine nach Anspruch 1, worin die Verpackungsstation (8) Ultraschall-Siegeleinrichtungen (20) beinhaltet, die stromabwärts nach dem rohrförmigen Dorn (17) angeordnet sind und deren Funktion darin besteht, die rohrförmige Umhüllung (18) in Querrichtung zu verschließen und somit eine kontinuierliche Aufeinanderfolge (101) von Beuteln (2) zu bilden.

3. Maschine nach Anspruch 1 oder 2, worin die Verpackungsstation (8) ferner Ansaugmittel (21) beinhaltet, die am Ausgang des rohrförmigen Domes (17) wirken.

## Revendications

1. Une machine de fabrication de sachets (2) contenant un matériau pulvérulent, comprenant :
- des moyens d'alimentation servant à alimenter le matériau à des moyens de transport (4) au niveau d'une station de distribution (5), d'où ce même matériau est transporté par lesdits moyens de transport (4) jusqu'à une station de transfert (6) ;
- des moyens de forçage (102), opérant au niveau de la station de transfert (6), servant à diriger des doses (7) prédéfinies de matériau depuis les moyens de transport (4) jusque dans au moins un conduit de raccordement (16) associé à une station d'emballage (8) où lesdites doses (7) sont enveloppées dans une succession continue (101) de sachets (2),
où la station d'emballage (8) comprend un mandrin tubulaire (17) situé au niveau de l'extrémité de sortie du conduit de raccordement (16) et autour duquel une enveloppe tubulaire (18) est formée à partir d'une bande continue (18a) de matériau d'emballage, et où la station d'emballage (8) est équipée de moyens de scellage servant à sceller longitudinalement ladite enveloppe tubulaire (18),
ladite machine étant **caractérisée en ce que** les moyens de scellage comprennent des moyens de scellage à ultrasons (19) opérant essentiellement en contact avec le mandrin tubulaire (17) de manière à transmettre audit mandrin (17) des vibrations à des fréquences ultrasoniques afin d'empêcher toute accumulation de dépôts sur la paroi intérieure dudit mandrin tubulaire (17).

2. La machine selon la revendication 1, **caractérisée en ce que** la station d'emballage (8) comprend des moyens de scellage à ultrasons (20) situés en aval du mandrin tubulaire (17) et dont la fonction est de sceller transversalement l'enveloppe tubulaire (18) afin de former une succession continue (101) de sachets (2).

3. La machine selon la revendication 1 ou 2, **caractérisée en ce que** la station d'emballage (8) comprend en outre des moyens d'aspiration (21) opérant au niveau de l'extrémité de sortie du mandrin tubulaire (17).
